# FASCICULE DE BREVET EUROPEEN

(11) **EP 3 359 502 B1**
(45) Date de publication et mention de la délivrance du brevet: **14.08.2019**
(21) Numéro de dépôt: 16777990.9
(22) Date de dépôt: 05.10.2016
(51) Int. Cl.: C04B 2/12, F27B 1/02, F27B 1/00, F27B 1/04, F27B 1/10, F27B 1/16, F27B 1/24, F27D 7/02, F27B 1/28

(54) **PROCÉDÉ DE CALCINATION DE ROCHE MINÉRALE DANS UN FOUR DROIT VERTICAL À FLUX PARALLÈLES RÉGÉNÉRATIF ET FOUR MIS EN OEUVRE**
VERFAHREN ZUM KALZINIEREN VON MINERALGESTEIN IN EINEM REGENERATIVEN PARALLELSTROM-VERTIKALSCHACHTOFEN UND OFEN DAFÜR
PROCESS FOR CALCINING MINERAL ROCK IN A REGENERATIVE PARALLEL-FLOW VERTICAL SHAFT FURNACE AND FURNACE USED THEREFOR

(30) Priorité: 06.10.2015 BE 201505631
(43) Date de publication de la demande: 15.08.2018
(73) Titulaire: S.A. Lhoist Recherche et Développement, 1342 Ottignies-Louvain-la-Neuve (BE)
(72) Inventeur: HABIB, Ziad, 1630 Linkebeek (BE); PADOX, Guilhem, 26750 Genissieux (FR)
(74) Mandataire: Gevers Patents
(86) Numéro de dépôt international: PCT/EP2016/073796
(87) Numéro de publication internationale: WO 2017/060303

(56) Documents cités:
- DE-A1- 19 843 820
- FR-A5- 2 091 767
- US-A- 4 315 735
- US-A- 6 113 387

## Description

La présente invention concerne un procédé de calcination de roche minérale dans un four droit vertical à flux parallèles régénératif (Parallel Flow Regenerative Kiln, PFRK) dans lequel au moins deux cuves sont interconnectées par une voie de transfert pour gaz.

Les fours à flux parallèles régénératifs comportent généralement deux ou trois cuves verticales interconnectées en leur partie centrale par un carneau de liaison. Ces cuves fonctionnent en alternance: l'une opère en mode cuisson (calcination) pendant une période de temps prédéterminée, par exemple de 10 à 12 minutes, pendant que l'autre ou les autres opère(nt) en mode préchauffage de la roche minérale. Ensuite la cuve en mode cuisson passe en mode préchauffage tandis que la cuve ou une des cuves en mode préchauffage passe en mode cuisson. Un cycle opératoire se répète ainsi chaque fois qu'une cuve donnée recommence à opérer en mode cuisson.

Le procédé utilisé dans ces fours connus comprend
- un chargement de roche minérale en haut des cuves, et
- un déchargement de roche minérale calcinée en bas des cuves,
- chaque cuve fonctionnant alternativement en mode cuisson et en mode préchauffage, une cuve étant en mode cuisson pendant une période de temps prédéterminée pendant qu'une autre cuve est en mode préchauffage, et inversement,
- le mode cuisson comprenant, en présence de ladite roche minérale, une combustion de combustible en présence de gaz contenant de l'oxygène de façon à obtenir une cuisson de cette roche en roche calcinée, un dégagement de gaz de combustion, et un passage de ces gaz de combustion de la cuve en mode cuisson vers l'autre cuve en mode préchauffage par l'intermédiaire de ladite voie de transfert pour gaz,
- le mode préchauffage comprenant un échange de chaleur entre ladite roche minérale et lesdits gaz de combustion issus de ladite voie de transfert pour gaz.

Par roche minérale, au sens de la présente invention, on entend en particulier de la roche calcaire, de la roche dolomitique, et/ou de la magnésite qui se calcinent respectivement en chaux vive, en dolomie vive et en magnésie.

Les roches ou pierres minérales sont chargées au sommet des cuves. C'est également dans la partie supérieure de ces cuves que se situent des lances permettant une amenée de combustible dans le four. La zone de préchauffage des pierres se situe entre le sommet de la cuve et les extrémités des lances à combustible. Les pierres, qui parviennent à l'extrémité des lances, atteignent alors, dans la cuve en mode cuisson alimentée en combustible et en gaz contenant de l'oxygène, une température variant généralement de 800 °C à 1300 °C. La ou les cuves en mode préchauffage ne sont alors pas alimentées en combustible. Les pierres placées dans la ou les cuves en mode préchauffage récupèrent l'énergie provenant des gaz issus de la cuve en mode cuisson. L'activité des cuves est inversée, par exemple toutes les dix à douze minutes, lorsque l'injection de combustible cesse dans la cuve en mode cuisson et que celle-ci passe alors en mode préchauffage et vice versa. Lorsqu'il y a deux cuves, un cycle dure donc généralement entre vingt et vingt-quatre minutes.

Par souci d'économie, il est avantageux dans ce type d'installation d'utiliser des combustibles peu coûteux. Malheureusement, la teneur en azote et en soufre de ces combustibles peu coûteux est élevée, ce qui pose potentiellement des problèmes environnementaux suite à l'émission de gaz tels que les oxydes d'azote NOₓ ou les oxydes de soufre SO_{X}. Un autre problème rencontré lors de l'utilisation de combustibles à haute teneur en soufre est que celui-ci est généralement capté par la chaux, ce qui n'est pas souhaité pour certaines applications telles qu'en sidérurgie où la teneur maximale en soufre dans la chaux est généralement limitée à 0,1 % en poids.

Des procédés permettant la diminution de la teneur en soufre dans la chaux sont notamment décrits dans les documents BE 1018212 et US 4315735. Dans ces brevets, il est préconisé de réduire la quantité d'air amené dans la cuve en mode cuisson afin d'effectuer une combustion incomplète des combustibles. Cette manipulation permet effectivement d'empêcher le soufre d'être capté par la chaux dans la cuve en mode cuisson. On a observé qu'elle permet aussi de réduire la quantité des NOx formés dans cette cuve en mode cuisson. L'air primaire de transport du combustible joue un rôle particulièrement important dans la combustion et la formation des NOₓ car il est pré-mélangé au combustible et est rapidement disponible pour se combiner à l'azote, contenu dans le combustible, dès que la température le permet. Une réduction de la quantité de cet air primaire s'avère donc favorable pour réduire les NOₓ. Malheureusement, la combustion incomplète des combustibles mène également à une augmentation de la quantité d'imbrûlés dans les gaz de combustion parvenant à la sortie du four, principalement le monoxyde de carbone. Dans ces documents antérieurs, la réduction de l'air amené dans la cuve en mode cuisson est effectuée jusqu'à l'observation d'une valeur seuil de monoxyde de carbone CO mesurée en aval de la cuve en mode cuisson, dans le carneau de liaison. Ces procédés sont donc basés sur l'observation d'une augmentation de la teneur en CO dans les gaz émis à la sortie du four, lesquels révèlent une perte d'énergie dans le procédé et représentent un grand inconvénient au niveau de la pollution atmosphérique, ces gaz pouvant même être incompatibles avec des législations environnementales.

Pour améliorer la performance des fours, il est connu d'introduire un combustible gazeux, liquide ou solide dans le carneau de liaison (voir FR 2091767 et DE 19843820). Enfin, il est aussi connu d'injecter de l'huile dans le carneau de liaison, par une lance, comme source de chaleur lors du démarrage du four (voir US 6113387).

La présente invention a pour but de pallier ces inconvénients en procurant un procédé permettant d'éviter les inconvénients liés à la teneur en soufre et en azote des combustibles peu coûteux mis en oeuvre, sans occasionner pour autant une augmentation inadmissible des imbrûlés dans les gaz de combustion sortant du four et donc une perte d'énergie et une pollution correspondantes.

Il est prévu suivant l'invention, un procédé tel qu'indiqué au début et qui comprend en outre une injection de gaz contenant de l'oxygène complémentaire dans ladite voie de transfert pour gaz avec oxydation d'imbrûlés contenus dans les gaz de combustion passant dans cette voie de transfert pour gaz.

Par imbrûlés, il faut entendre suivant la présente invention toute substance qui s'est imparfaitement combinée à l'oxygène du gaz contenant de l'oxygène mis en oeuvre pour la combustion du combustible. Ces imbrûlés peuvent donc comprendre de fines particules de carbone non brûlées au cours de la combustion, des molécules organiques, mais aussi et surtout du monoxyde de carbone. La présence de monoxyde de carbone dans les gaz de combustion est révélatrice d'une réaction d'oxydation incomplète du combustible pendant la combustion. Comme cette réaction d'oxydation est exothermique, cela signifie que, si elle est incomplète, une partie de l'énergie potentielle contenue dans le combustible a été perdue.

Le procédé suivant l'invention présente le grand avantage d'oxyder les imbrûlés présents, en particulier le monoxyde de carbone contenu dans les gaz de combustion, et donc d'éviter la perte d'énergie précitée, et cela de manière significative pendant leur passage d'une cuve à l'autre. L'apport de gaz contenant de l'oxygène complémentaire a donc lieu hors des cuves, dans un espace prévu pour un transfert de gaz d'une cuve à l'autre. Il n'interfère donc pas dans le fonctionnement prévu à l'intérieur des cuves.

Par gaz contenant de l'oxygène, on peut entendre dans la présente invention de l'air, de l'air enrichi en oxygène, ou de l'oxygène, par exemple de l'oxygène technique. Le gaz contenant de l'oxygène complémentaire peut également être de l'air, de l'air enrichi en oxygène, ou de l'oxygène, par exemple de l'oxygène technique, et contenir en outre un additif permettant d'améliorer l'oxydation des imbrûlés tels que des catalyseurs de combustion. On peut citer par exemple l'enrichissement en oxygène du gaz complémentaire où l'utilisation d'oxygène permet d'améliorer la réaction d'oxydation des gaz imbrûlés dans la voie de transfert pour gaz. Un tel procédé permet de stabiliser plus aisément la quantité de CO produite et de la garder en dessous des valeurs maximales autorisées. Dans la suite de la description, l'expression gaz contenant de l'oxygène sera, pour des raisons de simplicité, exprimé parfois seulement par le terme air.

Le procédé suivant l'invention permet ainsi de fonctionner sans inconvénient dans des conditions qui, d'une manière connue, ont pour effet de réduire la teneur en NOₓ dans les gaz émis par le four.

En effet, il est connu que l'azote atomique organique des combustibles réagit avec l'oxygène contenu dans l'air de combustion selon les réactions simplifiées suivantes :

2 N + O₂ ⇆ 2 NO

2 NO + O₂ ⇆ 2 NO₂

En réduisant notamment l'apport d'oxygène dans la cuve en mode cuisson lors de la combustion des combustibles, les réactions ci-dessus ne sont, dès lors, pas favorisées.

A l'inverse des procédés connus de l'état de la technique, le procédé suivant l'invention, s'il permet de diminuer la quantité de NOₓ dans un four à flux parallèle régénératif, évite en outre l'augmentation de la teneur en CO dans les gaz à la sortie du four. Ce procédé offre donc l'avantage de pouvoir utiliser des combustibles ou matières premières peu coûteux, riches en azote et en soufre tels que le coke de pétrole ou les déchets de bois, tout en respectant les législations environnementales concernant les teneurs en dioxyde de soufre, oxydes d'azote mais également en monoxyde de carbone contenus dans les gaz émis. Il est bien entendu que tous les types de combustibles solides, liquides ou gazeux usuels dans la technique peuvent être utilisés pour la cuisson de la roche minérale selon la présente invention, tels que le charbon, le bois, le lignite, le schiste bitumineux, la tourbe, la houille, l'anthracite, les alcools, le pétrole et ses dérivés, le gaz naturel, le biogaz, le gaz de pétrole liquéfié, les déchets (par exemple les déchets de bois, pépins de raisins, etc), etc.

Par ailleurs, la diminution de l'apport d'air global dans la cuve en mode cuisson permet de réduire les pertes de charge liées à l'écoulement des gaz à travers le lit de pierre de cette cuve ce qui signifie qu'une quantité plus importante de roche minérale peut être alimentée dans cette cuve. En conséquence, le procédé selon la présente invention permet également d'augmenter la productivité du four. Ceci constitue un gain économique et écologique étant donné que des combustibles riches en azote et en soufre et donc peu coûteux peuvent être utilisés, que la productivité instantanée du four est augmentée, et que les quantités de polluants atmosphériques émis sont limitées.

En particulier, selon l'invention, le gaz contenant de l'oxygène alimenté dans une cuve en mode cuisson est sous la forme d'un gaz contenant de l'oxygène primaire amené simultanément au combustible, en particulier par des lances à combustible, et d'un gaz contenant de l'oxygène secondaire, introduit en haut de cette cuve au travers de la roche à cuire. L'air primaire sert donc notamment au transport du combustible et à la combustion de ce dernier ou encore au refroidissement des lances d'injection du combustible. Une réduction de l'apport d'air primaire mène dès lors à une combustion incomplète du combustible dans la cuve de cuisson résultant en une production non négligeable d'imbrûlés, notamment du monoxyde de carbone. Afin d'optimiser la réduction d'apport d'air dans la cuve de cuisson, une réduction de l'apport d'air secondaire peut également être effectuée.

Selon un mode de réalisation particulier de l'invention, l'oxydation d'imbrûlés, produite pendant l'injection susdite de gaz contenant de l'oxygène complémentaire, est effectuée à une température d'oxydation suffisamment élevée pour permettre une oxydation du monoxyde de carbone et suffisamment basse pour éviter une dégradation thermique des molécules de diazote N₂ en azote atomique N. Cette température d'oxydation est avantageusement prévue entre 800°C et 1300°C, de préférence entre 900°C et 1250°C. En effet, les émissions d'oxyde d'azote NOₓ proviennent de deux réactions distinctes : la réaction de l'azote atomique organique des combustibles avec l'oxygène de l'air telle que décrite précédemment et la décomposition thermique de l'azote moléculaire de l'air en présence d'oxygène.

La décomposition thermique de l'azote moléculaire contenu dans l'air nécessite une température supérieure à 1250 °C. Les NOₓ sont alors formés par la combinaison d'azote atomique résultant de la dégradation thermique et de l'oxygène disponible dans l'air selon les réactions simplifiées suivantes :

N₂ (air) ⇆ 2 N

2 N + O₂ ⇆ 2 NO

2 NO + O₂ ⇆ 2 NO₂

La température qui règne à l'endroit de l'injection du gaz contenant de l'oxygène complémentaire est donc essentielle pour optimiser le procédé en favorisant l'oxydation du monoxyde de carbone en dioxyde de carbone et en limitant la formation de NOₓ dans la voie de transfert pour gaz interconnectant les cuves.

De préférence, selon un mode de réalisation du procédé selon l'invention, la quantité d'oxygène complémentaire injectée dans ladite voie de transfert pour gaz à l'aide du gaz contenant l'oxygène complémentaire est comprise entre 0.1 et 50 fois la quantité stoechiométrique d'oxygène calculée sur base de la quantité de CO mesurée à la sortie du four (à la cheminée) en l'absence de ce gaz contenant l'oxygène complémentaire.

Par l'expression « quantité stoechiométrique », on entend selon la présente invention, la quantité théorique d'oxygène nécessaire pour que la réaction d'oxydation du monoxyde de carbone soit complète et ait lieu dans des conditions stoechiométriques. Ces proportions stoechiométriques sont calculées par rapport à la quantité de CO mesurée dans les gaz à la sortie du four (à la cheminée) en l'absence du gaz contenant l'oxygène complémentaire.

La quantité d'oxygène à ajouter est notamment dictée par les quantités de CO et d'O₂ présentes dans les gaz de fumées du four, ainsi que par la vitesse minimale de ce gaz contenant l'oxygène complémentaire nécessaire pour assurer un bon mélange de l'oxygène complémentaire dans les gaz de fumées ; par exemple cette vitesse peut être au moins égale à la vitesse des gaz de fumées (de l'ordre de 5 à 15 m/s).

De plus, suivant un mode de réalisation particulier, le gaz contenant de l'oxygène complémentaire peut présenter au moment de l'injection une température comprise entre la température ambiante et 400°C. Le contrôle de cette température permet en outre d'éviter le refroidissement de la voie de transfert pour gaz qui mènerait à une diminution de l'efficacité de l'oxydation du monoxyde de carbone en dioxyde de carbone.

Suivant un mode de réalisation particulier de l'invention, la voie de transfert pour gaz est un carneau de liaison qui relie directement une cuve à l'autre. De préférence l'injection du gaz contenant de l'oxygène complémentaire dans le carneau de liaison a lieu à équidistance des cuves qu'il interconnecte. Cette position à équidistance des cuves est favorable étant donné que les modes de fonctionnement des cuves sont régulièrement inversés. L'injection du gaz complémentaire lorsqu'elle est réalisée à équidistance des cuves est, dès lors, indépendante de l'alternance des modes de cuisson et de préchauffage des cuves du four.

De plus, avantageusement, selon le procédé selon l'invention, le combustible est amené dans la cuve en mode cuisson par des lances produisant des faisceaux parallèles de jets de combustible qui subissent la combustion et forment des lignes de gaz de combustion qui passent par le carneau de liaison, une injection susdite de gaz contenant de l'oxygène complémentaire étant effectuée au niveau de chacune de ces lignes de gaz de combustion. Une simulation CFD (Computational Fluid Dynamics ou Mécanique des Fluides Numérique (MFN), en français), a permis d'obtenir une cartographie de la distribution des températures et de la concentration en oxygène dans la cuve en mode cuisson et dans le carneau de liaison. Ces simulations ont révélé que, lors de leur déplacement dans le carneau de liaison pour ensuite passer dans la cuve en mode préchauffage avant de quitter le four, les gaz issus de la combustion, comme le CO, suivent des trajectoires définies par la position des lances à combustible. Ces trajectoires que l'on appelle également les lignes de courant des gaz de combustion correspondent aussi aux endroits du carneau de liaison où la température est adéquate pour une oxydation optimale des imbrûlés.

Suivant un autre mode de réalisation particulier du procédé de l'invention, ladite voie de transfert pour gaz est formée d'un carneau de liaison qui relie des canaux périphériques agencés autour de chaque cuve de manière à permettre un accès des gaz de combustion depuis chaque cuve dans le carneau de liaison. Dans ce cas, ladite injection de gaz contenant de l'oxygène complémentaire peut avoir lieu dans le carneau de liaison, dans les canaux périphériques ou à la fois dans le carneau de liaison et les canaux périphériques.

Avantageusement, le procédé selon l'invention s'applique à un four droit vertical à flux parallèles régénératif comprenant deux cuves. Le four peut comprendre trois cuves et trois voies de transfert pour gaz qui interconnectent chacune deux desdites cuves précitées, et alors une cuve est en mode cuisson pendant une période de temps prédéterminée pendant que les deux autres cuves sont en mode préchauffage.

Suivant un mode de réalisation préféré du procédé de l'invention, la roche minérale est choisie parmi le groupe constitué de la roche calcaire, de la roche dolomitique, de la magnésite et de leur mélange.

Dans ce cas, le procédé de la présente invention est un procédé de production de chaux vive et/ou de dolomie vive et/ou de magnésie dans un four droit vertical à flux parallèles régénératif.

Les cuves du four peuvent être chacune chargées par une roche minérale de même nature. Alternativement, les cuves du four peuvent être chacune chargées par une roche minérale de nature différente.

D'autres modes de réalisation du procédé suivant l'invention sont indiqués dans les revendications annexées.

La présente invention concerne également un four droit vertical à flux parallèles régénératif pour la production de roche minérale calcinée comprenant
- au moins deux cuves interconnectées par une voie de transfert pour gaz,
chacune desdites cuves comprenant
- au moins un dispositif d'alimentation en combustible,
- au moins une amenée de gaz contenant de l'oxygène pour la combustion du combustible,
- une entrée pour le chargement de roche minérale, et
- une sortie pour le déchargement de ladite roche minérale calcinée produite, et
- une évacuation de gaz de combustion.

Le four suivant la présente invention comprend en outre une source de gaz contenant de l'oxygène complémentaire et un dispositif d'injection raccordé à cette source de gaz contenant de l'oxygène complémentaire et agencé pour injecter ce gaz contenant de l'oxygène complémentaire dans ladite voie de transfert pour gaz. Ce dispositif permet de résoudre le problème lié à la formation d'imbrûlés pendant la combustion. En effet, selon la présente invention, les imbrûlés, tels que le CO, formés dans la cuve en mode cuisson et passant par la voie de transfert pour gaz, sont oxydés par l'air complémentaire avant d'atteindre la cuve en mode préchauffage et ensuite la sortie du four. Cela permet d'éviter toute perte d'énergie résultant d'une oxydation imparfaite des matières carbonées formant le combustible et de répondre aux exigences environnementales relatives à la teneur en CO des gaz de combustion répandus dans l'atmosphère. L'oxydation des imbrûlés a par ailleurs lieu dans un espace situé hors des cuves et l'apport de gaz contenant de l'oxygène complémentaire n'influence de ce fait pas le fonctionnement des cuves elles-mêmes. C'est important en particulier lorsque la cuisson des pierres ou roches est réalisée dans des conditions menant à une combustion incomplète des combustibles. En effet, la combustion incomplète permet, notamment, de réduire la teneur en NOₓ. Avec un four selon l'invention, les quantités de NOₓ sont dès lors diminuées alors que la teneur en CO dans les gaz émis est maintenue inférieure aux prescriptions légales.

Suivant l'invention, la voie de transfert pour gaz peut être un carneau de liaison qui relie directement une cuve à l'autre. Elle peut aussi être formée d'un carneau de liaison qui relie des canaux périphériques agencés autour de chaque cuve de manière à permettre un accès des gaz de combustion depuis chaque cuve dans le carneau de liaison. Dans ce dernier cas, le dispositif d'injection susdit est agencé pour injecter des gaz contenant de l'oxygène complémentaire dans un carneau de liaison, dans les canaux périphériques ou à la fois dans le carneau de liaison et les canaux périphériques.

De manière avantageuse, le dispositif d'injection comprend au moins une canne d'injection droite perforée introduite dans le carneau de liaison et alimentée par une source de gaz contenant de l'oxygène complémentaire. Cette canne d'injection est avantageusement placée transversalement par rapport à l'axe longitudinal du carneau de liaison mais peut également être orientée en divergence par rapport à l'axe transversal du carneau de liaison. Ce dispositif permet d'injecter aisément l'air complémentaire en aval de la cuve en mode cuisson, et ce sur quasi toute la largeur du carneau de liaison, afin d'oxyder un maximum d'imbrûlés, en particulier provenant d'une combustion incomplète.

De préférence, selon la présente invention, la canne d'injection comporte un ou plusieurs orifices orientés pour injecter le gaz contenant de l'oxygène complémentaire vers une partie haute du carneau de liaison. Les cartographies obtenues au moyen des simulations CFD ont aussi révélé que les gaz issus de la combustion sont principalement localisés dans la partie supérieure du carneau de liaison où il s'avère également que les températures sont les plus élevées. Comme décrit précédemment, la température est importante pour la réaction d'oxydation des imbrûlés. Afin d'obtenir une oxydation optimale des imbrûlés provenant de la cuve en mode cuisson, l'injection d'air complémentaire est donc préférentiellement effectuée dans la partie haute du carneau de liaison.

Suivant une forme de réalisation particulière, le four présente une canne d'injection introduite dans le carneau de liaison par une ouverture équidistante desdites cuves. L'injection du gaz complémentaire est, dès lors, indépendante de l'alternance des modes de cuisson et de préchauffage des cuves du four.

Selon une forme de réalisation particulière de l'invention, le carneau de liaison présente un plafond et un axe longitudinal et le dispositif d'injection de gaz contenant de l'oxygène complémentaire comporte une ou plusieurs ouvertures prévues dans ce plafond de carneau de liaison au travers desquelles le gaz contenant de l'oxygène complémentaire peut être alimenté à partir d'une source d'un tel gaz, lesdites ouvertures étant situées à équidistance des cuves et perpendiculairement à cet axe longitudinal. Ces orifices représentent une alternative efficace à la canne d'injection étant donné qu'ils permettent d'injecter le gaz complémentaire directement sur les lignes de courant de gaz de combustion au niveau du plafond du carneau de liaison. Comme prouvé par les simulations CFD, c'est effectivement en ces endroits que la quantité d'imbrûlés est maximale et que la température est idéale pour l'oxydation de ceux-ci.

Dans ce mode de réalisation particulier, lesdites ouvertures du dispositif d'injection de gaz contenant l'oxygène complémentaire sont avantageusement munies de systèmes mécaniques de diffusion ou de mise en rotation permettant d'améliorer la répartition de l'air complémentaire dans le carneau de liaison.

Dans une forme de réalisation particulièrement avantageuse du four selon l'invention, le dispositif d'alimentation en combustible comprend une ou plusieurs séries d'une ou plusieurs lances mono-jet ou multi-jet agencées de manière à produire des faisceaux de jets de combustible parallèles dans la cuve correspondante, ces faisceaux étant parallèles entre eux, les jets de combustible des différents faisceaux susdits étant situés dans plusieurs plans parallèles à l'axe longitudinal du carneau de liaison.

Avantageusement, dans le four selon l'invention, les orifices de la canne d'injection ou les ouvertures dans le plafond du carneau de liaison pour l'injection du gaz complémentaire contenant de l'oxygène sont prévus dans lesdits plans formés par les faisceaux susdits. Comme décrit précédemment grâce aux simulations CFD, ces plans représentent les lignes de courant des gaz issus de la combustion.

Avantageusement, le four selon l'invention comprend deux cuves et une voie de transfert pour gaz qui les interconnecte. On peut aussi prévoir que le four comprenne trois cuves et trois voies de transfert pour gaz qui interconnectent chacune deux desdites cuves précitées, ainsi qu'un dispositif d'injection pour injecter du gaz contenant de l'oxygène complémentaire dans chacune desdites voies de transfert pour gaz.

D'autres formes de réalisation du four suivant l'invention sont indiquées dans les revendications annexées.

D'autres détails et particularités de l'invention ressortiront de la description donnée ci-après, à titre non limitatif, en faisant référence aux dessins annexés.
La figure 1a illustre schématiquement un four droit vertical à flux parallèles régénératif à section rectangulaire et à deux cuves reliées par un carneau de liaison,
La figure 1b illustre schématiquement un four droit vertical à flux parallèles régénératif à section circulaire, à deux cuves avec canaux périphériques annulaires reliés par un carneau de liaison.
La figure 2 illustre une vue en coupe transversale, suivant la ligne I-I de la figure 1a, d'un carneau de liaison d'une forme de réalisation d'un four suivant l'invention.
La figure 3 représente une vue en coupe transversale, également suivant la ligne I-I de la figure 1a, d'une autre forme de réalisation de carneau de liaison d'un four suivant l'invention.
La figure 4 illustre une vue suivant la ligne IV-IV de la figure 1a d'une forme de réalisation du four, telle qu'illustrée sur la figure 3.
La figure 5 représente une vue en coupe suivant la ligne V-V de la figure 1b d'une forme de réalisation d'un four suivant l'invention.
La figure 6 représente une vue en coupe analogue à celle de la figure 5 dans un four suivant l'invention comportant trois cuves.

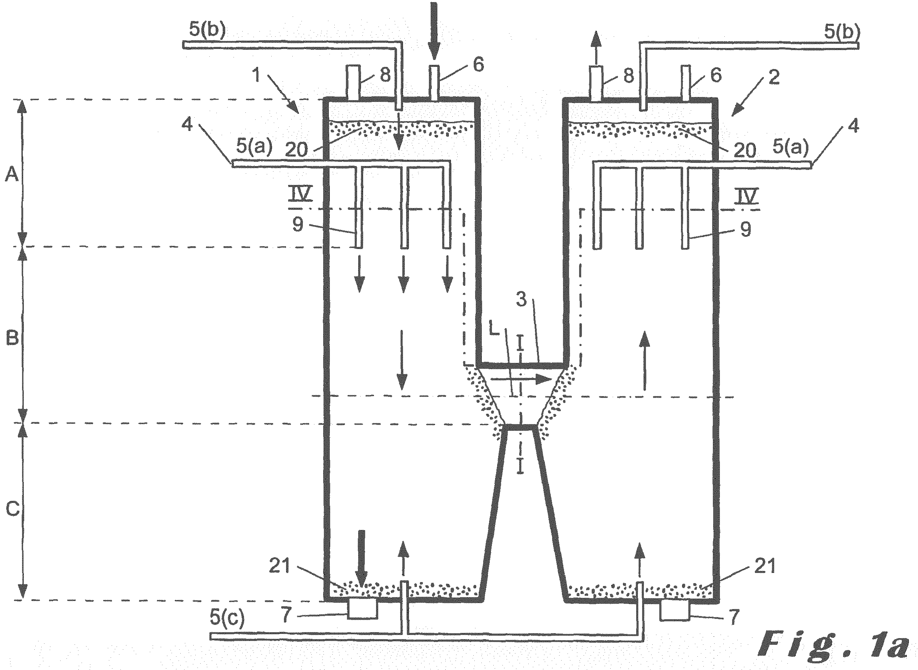

Sur la figure 1a, un four droit vertical à flux parallèles régénératif pour la production de roche minérale calcinée est représenté schématiquement. Sur ce schéma, le four comprend deux cuves 1 et 2 à section rectangulaire, interconnectées par un carneau de liaison 3 qui, dans cet exemple, relie directement les deux cuves. La roche minérale 20 est chargée par la partie supérieure des cuves, par exemple par l'entrée 6, où elle se trouve en zone de préchauffage A. Chaque cuve présente un dispositif d'alimentation en combustible 4 comportant des lances à combustible 9 et des dispositifs d'amenée de gaz contenant de l'oxygène 5(a) et 5(b) pour la combustion du combustible. La roche minérale initialement chargée dans la zone de préchauffage A, qui s'étend de la partie supérieure de la cuve à l'extrémité des lances à combustible 9, passe ensuite dans la zone de cuisson B comprise entre l'extrémité des lances à combustible 9 et le niveau inférieur du carneau de liaison 3. La roche minérale calcinée 21 est récupérée dans la partie inférieure des cuves dans la zone C de refroidissement et déchargée, par exemple par la sortie 7, et les gaz issus de la combustion sont évacués par la partie supérieure des cuves 1 et 2, par exemple par la cheminée d'évacuation 8.

Les cuves 1 et 2 d'un four droit vertical à flux parallèles régénératif fonctionnent en alternance dans un cycle à deux temps : dans un premier temps, la première cuve sert à la cuisson lorsque la deuxième cuve sert au préchauffage et, inversement, dans un second temps, la deuxième cuve sert à la cuisson lorsque la première cuve sert au préchauffage. Le chargement de la roche minérale se fait généralement en milieu de cycle, au même moment que le basculement des circuits des fluides d'une cuve à l'autre permettant l'inversion des flux de gaz dans le four. Sur la figure 1a, la cuve 1 est en mode cuisson, tandis que la cuve 2 est en mode préchauffage. Dans la cuve en mode cuisson 1, le combustible est amené par les lances 9 du dispositif d'alimentation 4 et l'air nécessaire pour la combustion de ce combustible est amené par les lances à combustible 5(a) (air primaire) et par la partie supérieure 5(b) (air secondaire) de la cuve 1 au travers de la roche située en zone de préchauffage A qui a été préalablement préchauffée. Ceci permet d'atteindre, dans la zone de cuisson B, une température suffisamment élevée pour réaliser la cuisson de la roche. La roche calcinée ainsi produite et refroidie dans la zone de refroidissement C par de l'air amené par le dispositif 5(c) à la partie inférieure de la première cuve 1 est récupérée par la sortie 7 prévue à cette partie inférieure de la cuve. La cheminée d'évacuation 8 de la cuve en mode cuisson est fermée. L'air primaire alimenté par le dispositif 5(a) ainsi que l'air secondaire introduit par le dispositif 5(b) dans la partie supérieure de la cuve 1 et l'air de refroidissement amené par le dispositif 5(c) forcent ainsi une circulation des gaz vers la cuve en mode préchauffage 2 où uniquement une partie de l'air de refroidissement est injectée en 5(c). Les gaz issus de la combustion de combustible dans la première cuve 1 en mode cuisson passent donc par le carneau de liaison 3 avant d'atteindre la deuxième cuve 2 du four en mode préchauffage où ni combustible, ni gaz contenant de l'oxygène primaire ou secondaire n'est alimenté. La roche minérale chargée dans la zone de préchauffage A de cette deuxième cuve 2 récupère, dès lors, l'énergie calorifique de ces gaz de combustion par échange thermique, avant leur sortie du four par la cheminée d'évacuation 8 qui, dans la cuve en mode préchauffage, est ouverte. La roche est ainsi préchauffée pour le moment où cette deuxième cuve va fonctionner en mode cuisson.

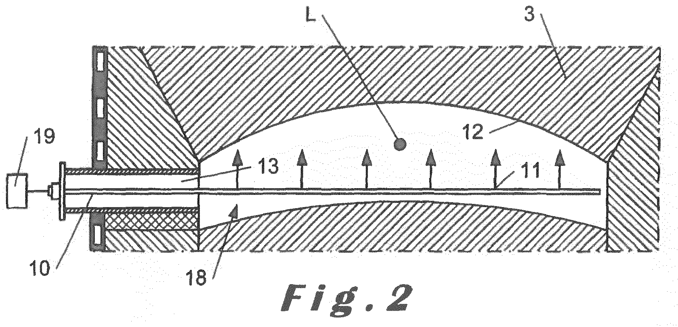

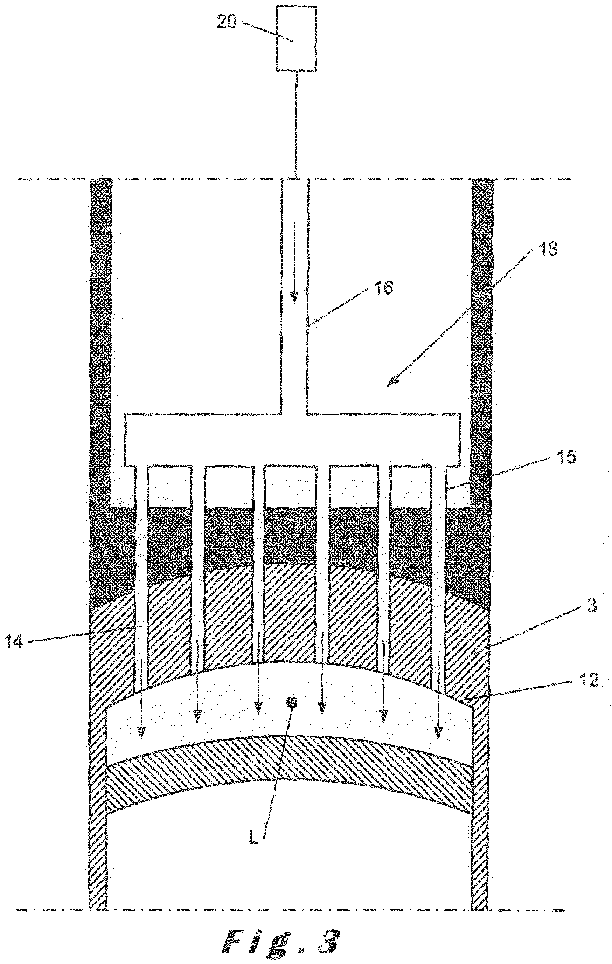

Un tel four peut, selon la présente invention, comprendre, comme illustré sur les figures 2 et 3, un dispositif d'injection 18 pour injecter du gaz contenant de l'oxygène complémentaire dans le carneau de liaison 3. Ce dispositif 18 a comme avantage d'oxyder, dans le carneau de liaison 3, les imbrûlés, principalement le monoxyde de carbone, contenus dans les gaz de combustion provenant de la cuve en mode cuisson 1 et cela avant leur sortie de la cuve 2. Le carneau de liaison 3 est l'endroit idéal pour accueillir ce dispositif d'injection d'air 18 car sa position centrale par rapport aux cuves 1 et 2 permet d'utiliser ce dispositif d'injection d'air indépendamment du fait que l'on soit dans le premier ou le deuxième temps des cycles du four, et donc indépendamment du fait que la cuve 1 soit en mode cuisson et la cuve 2 en mode préchauffage ou l'inverse. L'oxydation des imbrûlés dans le carneau de liaison a pour effet de maintenir, sinon même d'augmenter, la température des gaz de combustion avant leur mise en oeuvre pour le préchauffage des roches dans la cuve 2. Des imbrûlés sont obtenus après la combustion, et ils le sont en particulier lorsque l'apport de gaz contenant de l'oxygène pour la combustion 5(a) et/ou 5(b) est diminué dans la cuve en mode cuisson de manière à provoquer ainsi une combustion incomplète du combustible. Une telle réduction de l'apport d'air dans la cuve en mode cuisson 1 peut être effectuée en diminuant la quantité d'air primaire 5(a) qui est injectée par les lances à combustible 9 et qui sert notamment à la combustion de celui-ci. Dans le cas d'un combustible solide, tout ou une partie de cet air primaire est prémélangé avec le combustible et sert notamment au transport de celui-ci ; de ce fait, l'air primaire de transport est un contributeur principal à la formation des NOx par l'apport d'oxygène intimement mélangé au combustible et donc immédiatement disponible. Une autre manière d'effectuer une combustion incomplète dans la cuve en mode cuisson 1 consiste à réduire l'apport d'air secondaire 5(b) qui est injecté par la partie supérieure de la cuve en mode cuisson 1 au travers des roches en zone de préchauffage A. On peut aussi évidemment réduire simultanément les quantités d'air primaire et d'air secondaire.

Alternativement, si la réduction de la quantité d'air primaire n'est pas possible, du fait notamment que celui-ci soit nécessaire au transport du combustible solide, il est également possible de réduire la concentration en oxygène de cet air primaire en l'enrichissant en gaz neutre (N₂, CO₂,...) ou en le substituant par des gaz de fumées recyclées pauvres en oxygène.

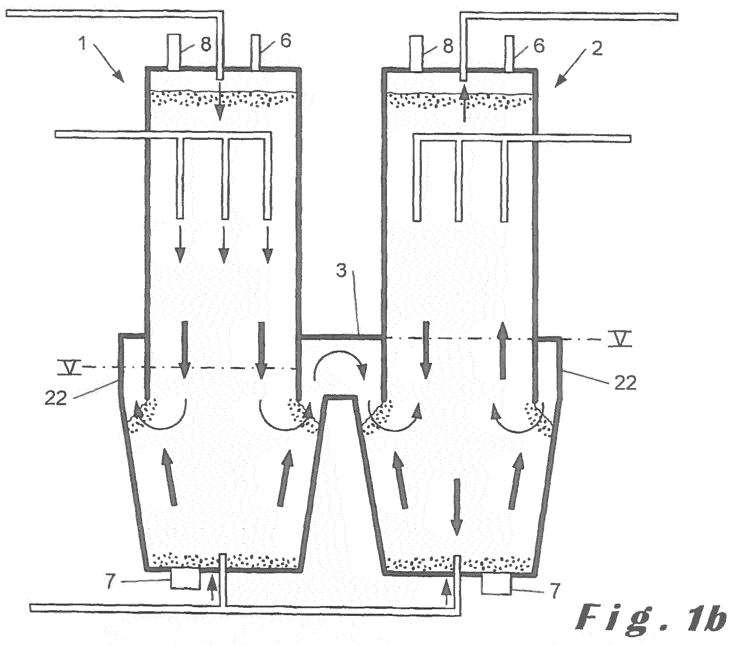

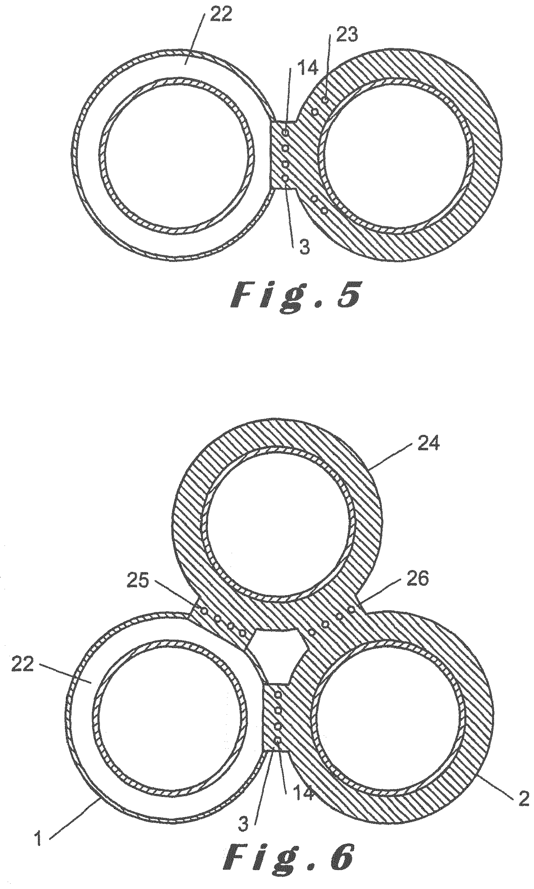

A la différence du four selon la figure 1a, le four selon les figures 1b et 5 présente des cuves à section circulaire. Ici le carneau de liaison 3 relie deux canaux périphériques annulaires 22, qui entourent chacun une cuve. Ils sont agencés de manière à permettre un accès des gaz de combustion depuis chaque cuve dans le carneau de liaison et cela sur tout le pourtour de ces cuves. Ces canaux périphériques 22 se trouvent en dehors de l'écoulement des blocs cuits de roche minérale et forment donc avec le carneau de liaison 3 une voie de transfert pour gaz qui interconnecte les deux cuves.

La figure 2 illustre une vue en coupe transversale par rapport à l'axe longitudinal L du carneau de liaison 3 d'une première forme de réalisation de four suivant l'invention. Selon cette forme de réalisation, le four présente une canne droite 10 insérée dans le carneau de liaison 3 par une ouverture 13 et placée transversalement par rapport à l'axe longitudinal L de ce carneau de liaison 3, soit horizontalement comme représenté sur la figure 2, soit avec un certain angle d'inclinaison par rapport à l'horizontale, de sorte que les orifices 11 à l'extrémité de la canne soient plus proches du plafond 12 du carneau de liaison que les orifices 11 proches de l'ouverture 13. Les orifices 11 de la canne 10 sont orientés de manière à injecter le gaz contenant de l'oxygène complémentaire préférentiellement vers le plafond 12 du carneau de liaison 3. C'est effectivement au niveau de ce plafond que la quantité d'imbrûlés est la plus importante et que la température est idéale pour l'oxydation de ceux-ci. La canne 10 est avantageusement insérée à équidistance des deux cuves 1 et 2 afin de pouvoir utiliser le dispositif indépendamment des modes cuisson et préchauffage des cuves. Elle est alimentée en gaz par une source de gaz contenant de l'oxygène complémentaire 19, représentée de manière schématique.

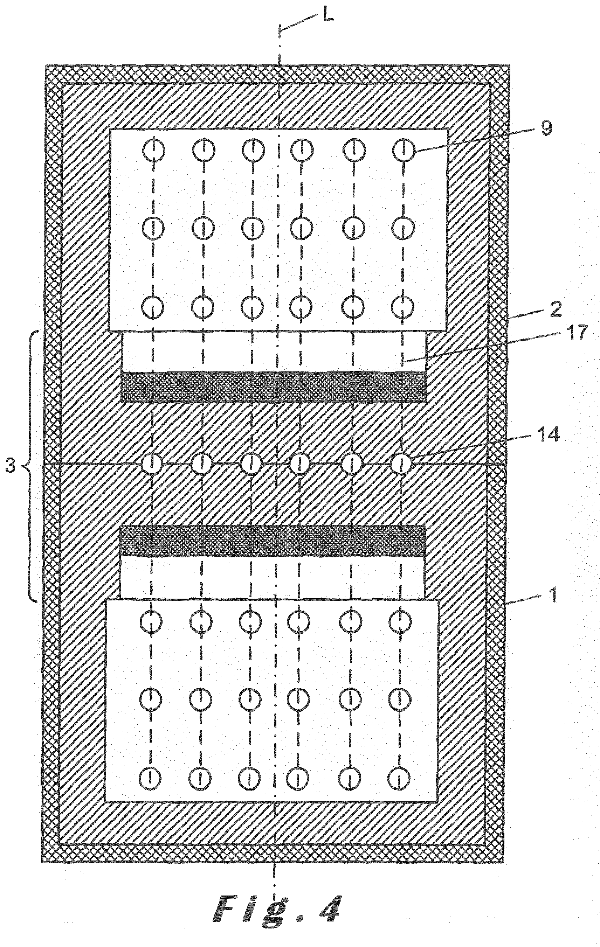

La figure 3 représente une vue en coupe transversale par rapport à l'axe longitudinal L du carneau de liaison 3 d'une autre forme de réalisation de four suivant l'invention. Selon cette forme de réalisation, le carneau de liaison 3 présente des ouvertures 14 dans son plafond 12. Les ouvertures 14 dans le plafond 12 du carneau de liaison sont avantageusement situées dans un plan équidistant des cuves (voir Fig. 4) et perpendiculaire à l'axe longitudinal L du carneau de liaison 3. Le gaz contenant de l'oxygène complémentaire peut être alimenté par une série de canalisations 15 menant aux ouvertures 14 du plafond 12 du carneau de liaison 3. Ces canalisations peuvent être regroupées en une canalisation principale 16 provenant de la source 20 du gaz injecté, qui est représentée de manière schématique. Un compresseur, non représenté, placé en amont de cette canalisation 16 permet de régler le débit de l'air injecté pour vaincre, en outre, la pression positive qui règne dans le four. Par ailleurs, les ouvertures 14 prévues directement dans le plafond 12 du carneau de liaison 3 permettent d'injecter l'air complémentaire directement dans les zones contenant la majorité des imbrûlés et présentant une température optimale pour leur oxydation.

Sur la figure 4, les cuves 1 et 2 du four se trouvent de part et d'autre du carneau de liaison 3 dans lequel des ouvertures 14 sont situées dans un plan équidistant des cuves 1 et 2 et perpendiculaire à l'axe longitudinal L du carneau de liaison 3. Dans ce cas de cuves rectangulaires, le dispositif d'alimentation en combustible 4 comprend six séries de trois lances à combustible 9 agencées de manière à créer des faisceaux de jets de combustible situés dans six plans 17 parallèles entre eux et parallèles à l'axe longitudinal L du carneau de liaison 3. La figure 4 met en évidence que les ouvertures 14 dans le plafond 12 du carneau de liaison 3 sont positionnées dans ces plans parallèles 17. Ces plans correspondent aux lignes de courant des gaz de combustion qui sont issus de la cuve en mode cuisson 1 et dans lesquelles se trouve la concentration la plus élevée en imbrûlés de ce courant de gaz.

Ainsi qu'il ressort de la figure 5, qui représente une vue en coupe transversale d'un four du type représenté sur la figure 1b, l'injection des gaz contenant de l'air complémentaire peut s'effectuer non seulement par des ouvertures 14 prévues dans le carneau de liaison, mais aussi par des ouvertures 23 prévues dans les canaux périphériques 22.

La figure 6 représente une vue en coupe dans une telle forme de réalisation de four suivant l'invention comportant 3 cuves 1, 2 et 24 interconnectées par 3 carneaux de liaison 3, 25 et 26. Les cuves 2 et 24 sont en mode préchauffage pendant que la cuve 1 est en mode cuisson et ainsi de suite.

### Exemple comparatif 1

Un four industriel à flux parallèles régénératif possédant deux cuves rectangulaires interconnectées par un carneau de liaison permettant le passage direct des gaz d'une cuve à l'autre a été utilisé dans des conditions standards pour produire de la chaux vive. Un combustible contenant environ 2 % en poids d'azote organique, par rapport au poids total du combustible, tel qu'un mélange de sciure de bois et de déchets de bois (50/50) a été utilisé dans cette installation. Dans ces conditions standards, dans la cuve en mode cuisson, le débit d'air primaire (servant ici au transport du combustible) est de 2700 Nm³/h, le débit d'air secondaire est de 5526 Nm³/h et le débit de combustible est de 1790 kg/h. La roche calcaire une fois cuite est refroidie grâce à un débit d'air de refroidissement de 4990 Nm³/h. Cette installation permet la cuisson de 311 tonnes de roche par jour, ce qui correspond à 175 tonnes de produit cuit (chaux vive) par jour.

### Exemple comparatif 2

Dans le four à flux parallèles régénératif présenté dans l'exemple comparatif 1, une combustion incomplète a été produite dans la cuve en mode cuisson grâce à une réduction d'apport d'air dans celle-ci, par rapport à son fonctionnement standard. Cette réduction a été obtenue en diminuant d'environ 12 % en volume le débit d'air secondaire injecté, ce qui signifie que le débit d'air secondaire est passé de 5526 Nm³/h à 4842 Nm³/h. On a ainsi atteint une réduction de la concentration des NOₓ dans les fumées de l'ordre de 12 % en volume. On a toutefois veillé à maintenir une température suffisante pour effectuer la calcination des roches, c'est-à-dire une température supérieure à 900 °C.

Cependant, il a résulté également de cette réduction de l'apport d'air dans la cuve en mode cuisson une augmentation notable de la formation d'imbrûlés, tels que le monoxyde de carbone CO, susceptible de détériorer le rendement énergétique du four et de poser des problèmes environnementaux suite à leur émission.

### Exemple suivant l'invention

Un dispositif d'injection d'air complémentaire suivant l'invention a été installé dans le four présenté dans l'exemple comparatif 2 afin d'oxyder les imbrûlés obtenus suite à la combustion incomplète. Le dispositif d'injection d'air complémentaire est tel que représenté sur les figures 3 et 4 où six ouvertures pour l'injection d'air complémentaire sont présentes dans le plafond du carneau de liaison, ouvertures qui sont disposées dans les plans de six séries de quatre lances à combustible, plans par où passent les lignes de courant de gaz où la concentration en imbrûlés est la plus élevée.

Le dispositif d'injection d'air complémentaire a été dimensionné sur base de conditions très critiques en termes de teneur en CO. En effet, il a été considéré que la teneur maximale en CO susceptible d'être atteinte en sortie de cheminée est de 1% en volume par rapport à un gaz de fumée contenant 11% en volume d'oxygène (c.-à-d. 12500 mg de CO/Nm³ de gaz de fumée), ce qui est connu pour correspondre à environ 2% en volume brut de CO au niveau du carneau de liaison. En pratique, cependant, la teneur en CO est généralement plus faible. Par conséquent, la quantité stoechiométrique d'oxygène complémentaire réellement nécessaire sera moindre, laissant supposer que le débit d'air complémentaire pourra être réduit. Néanmoins, le dispositif d'injection d'air complémentaire existant impose un débit minimum pour assurer une vitesse suffisante afin d'obtenir un bon mélange de l'oxygène complémentaire dans les gaz de fumées.

Dans le présent exemple, le débit d'air complémentaire injecté correspond à une quantité d'oxygène complémentaire équivalent à 12 fois la quantité stoechiométrique.

En plus de l'oxydation des imbrûlés avant la sortie des gaz de combustion du four, oxydation qui a été effectuée entre 800 et 1300 °C, on a pu observer que la réduction de NOₓ était maintenue. Un effet surprenant de la présente invention a en outre consisté en l'augmentation inattendue d'environ 3% de la productivité instantanée du four. En effet, malgré l'injection d'air complémentaire dans le carneau de liaison, la diminution de l'apport d'air dans la cuve en mode cuisson mène à une diminution de la perte de charge et donc de la pression statique dans cette cuve, ce qui permet dès lors d'introduire une quantité plus importante de roche calcaire en zone de préchauffage de cette cuve et donc d'augmenter la production du four.

Les teneurs en oxyde d'azote NOₓ et en monoxyde de carbone CO ont été mesurées en sortie de cheminée (et exprimées à 11 % d'oxygène) pour les trois exemples repris ci-dessus.
1) Conditions standards (Exemple comparatif 1).
2) Réduction de la quantité d'air dans la cuve en mode cuisson, mais sans apport d'air dans le carneau (Exemple comparatif 2).
3) Réduction de la quantité d'air dans la cuve en mode cuisson **et** ajout d'air complémentaire (débit = 500 Nm³/h) dans le carneau (Exemple suivant l'invention).

**TABLEAU 1**

| | **1** | **2** | **3** |
|---|---|---|---|
| Teneur en NOₓ (mg/Nm³) | 400 | 350 | 350 |
| Teneur en CO (mg/Nm³) | 100-200 | 500-800 | 100-200 |

Ce tableau comparatif permet de mettre en évidence le fait qu'une diminution d'apport d'air dans la cuve en cuisson réduit la teneur en NOₓ dans les gaz émis à la sortie du four mais résulte malheureusement en une augmentation considérable de la teneur en CO (Exemple comparatif 2).

Par ailleurs, lorsque de l'air complémentaire est injecté dans le carneau de liaison, la teneur en NOₓ reste diminuée tandis que des teneurs en CO identiques à celles obtenues en absence de combustion incomplète sont à nouveau observées (Exemple suivant l'invention).

La présente invention permet donc de diminuer l'émission de NOₓ de 12,5 % par rapport aux conditions standards tout en gardant des teneurs de CO identiques.

Il est bien entendu que la présente invention n'est en aucune façon limitée aux formes de réalisations décrites ci-dessus et que bien des modifications peuvent y être apportées sans sortir du cadre des revendications annexées.

On peut par exemple noter que le four selon l'invention peut convenir pour la cuisson de roche calcaire dans une cuve et de roche dolomitique dans une autre cuve. A noter que seul un type de roche est contenu au sein d'une cuve. C'est-à-dire que si par exemple, la cuve en mode cuisson contient de la roche calcaire, la cuve en mode préchauffage peut contenir de la roche calcaire ou de la roche dolomitique et inversement. Il en résulte que lors d'un cycle, de la chaux vive et de la dolomie vive peuvent être produites simultanément mais dans des cuves différentes.

## Revendications

1. Procédé de calcination de roche minérale dans un four droit vertical à flux parallèles régénératif, dans lequel au moins deux cuves sont interconnectées par une voie de transfert pour gaz, ce procédé comprenant
- un chargement de roche minérale en haut des cuves, et
- un déchargement de roche minérale calcinée en bas des cuves,
- chaque cuve fonctionnant alternativement en mode cuisson et en mode préchauffage, une cuve étant en mode cuisson pendant une période de temps prédéterminée pendant qu'une autre cuve est en mode préchauffage, et inversement,
- le mode cuisson comprenant, en présence de ladite roche minérale, une combustion de combustible en présence de gaz contenant de l'oxygène de façon à obtenir une cuisson de cette roche en roche calcinée, un dégagement de gaz de combustion, et un passage de ces gaz de combustion de la cuve en mode cuisson vers l'autre cuve en mode préchauffage par l'intermédiaire de ladite voie de transfert pour gaz,
- le mode préchauffage comprenant un échange de chaleur entre ladite roche minérale et lesdits gaz de combustion issus de ladite voie de transfert pour gaz,
ce procédé étant **caractérisé en ce qu'**il comprend en outre une injection de gaz contenant de l'oxygène complémentaire dans ladite voie de transfert pour gaz avec oxydation d'imbrûlés contenus dans les gaz de combustion passant dans cette voie de transfert pour gaz.

2. Procédé selon la revendication 1, dans lequel le gaz contenant de l'oxygène alimenté à une cuve en mode cuisson est sous la forme d'un gaz contenant de l'oxygène primaire, amené simultanément au combustible, et d'un gaz contenant de l'oxygène secondaire introduit en haut de cette cuve au travers de la roche à cuire.

3. Procédé selon l'une des revendications 1 et 2, dans lequel ladite oxydation d'imbrûlés est effectuée à une température d'oxydation suffisamment élevée pour permettre une oxydation de monoxyde de carbone et suffisamment basse pour éviter une dégradation thermique de molécules de diazote en azote atomique.

4. Procédé selon la revendication 3, dans lequel ladite température d'oxydation est comprise entre 800 °C et 1300 °C.

5. Procédé selon l'une quelconque des revendications 1 à 4, dans lequel la quantité d'oxygène complémentaire injectée dans ladite voie de transfert pour gaz à l'aide dudit gaz contenant l'oxygène complémentaire est comprise entre 0.1 et 50 fois la quantité stoechiométrique d'oxygène calculée sur base de la quantité de CO mesurée à la sortie du four en l'absence de ce gaz contenant l'oxygène complémentaire.

6. Procédé selon l'une quelconque des revendications 1 à 5, dans lequel le gaz contenant de l'oxygène complémentaire présente au moment de l'injection une température comprise entre la température ambiante et 400 °C.

7. Procédé selon l'une quelconque des revendications 1 à 6, dans lequel le gaz contenant de l'oxygène complémentaire est de l'air, de l'air enrichi en oxygène ou de l'oxygène.

8. Procédé selon l'une quelconque des revendications 1 à 7, dans lequel le gaz contenant de l'oxygène complémentaire contient au moins un catalyseur de combustion.

9. Procédé selon l'une quelconque des revendications 1 à 8, dans lequel ladite voie de transfert pour gaz est un carneau de liaison qui relie directement une cuve à l'autre.

10. Procédé suivant la revendication 9, dans lequel le gaz contenant de l'oxygène complémentaire est injecté au carneau de liaison à équidistance des cuves qu'il interconnecte.

11. Procédé selon l'une des revendications 9 et 10 dans lequel le combustible est amené dans la cuve en mode cuisson par des lances produisant des faisceaux parallèles de jets de combustible qui subissent la combustion et forment des lignes de gaz de combustion qui passent par le carneau de liaison, une injection susdite de gaz contenant de l'oxygène complémentaire étant effectuée au niveau de chacune de ces lignes de gaz de combustion.

12. Procédé selon l'une quelconque des revendications 1 à 8 dans lequel ladite voie de transfert pour gaz est formée d'un carneau de liaison qui relie des canaux périphériques agencés autour de chaque cuve de manière à permettre un accès des gaz de combustion depuis chaque cuve dans le carneau de liaison.

13. Procédé selon la revendication 12, dans lequel ladite injection de gaz contenant de l'oxygène complémentaire a lieu dans le carneau de liaison, dans les canaux périphériques ou à la fois dans le carneau de liaison et les carnaux périphériques.

14. Procédé selon l'une des revendications 1 à 13, dans lequel le four comprend trois cuves et trois voies de transfert pour gaz qui interconnectent chacune deux desdites cuves précitées, et dans lequel une cuve est en mode cuisson pendant une période de temps prédéterminée pendant que les deux autres cuves sont en mode préchauffage.

15. Four droit vertical à flux parallèles régénératif pour la production de roche minérale calcinée comprenant
- au moins deux cuves (1, 2) interconnectées par une voie de transfert pour gaz (3),
chacune desdites cuves comprenant
- au moins un dispositif d'alimentation en combustible (4),
- au moins une amenée de gaz contenant de l'oxygène pour la combustion du combustible (5(a), 5(b)),
- une entrée pour le chargement de roche minérale (6), et
- une sortie pour le déchargement de ladite roche minérale calcinée produite (7), et
- une évacuation de gaz de combustion (8),
ledit four étant **caractérisé en ce qu'**il comprend en outre une source de gaz contenant de l'oxygène complémentaire et un dispositif d'injection raccordé à cette source de gaz contenant de l'oxygène complémentaire (18) et agencé pour injecter ce gaz contenant de l'oxygène complémentaire dans ladite voie de transfert pour gaz (3).

16. Four selon la revendication 15, dans lequel la voie de transfert pour gaz est un carneau de liaison qui relie directement une cuve à l'autre.

17. Four selon la revendication 15, dans lequel ladite voie de transfert pour gaz est formée d'un carneau de liaison qui relie des canaux périphériques agencés autour de chaque cuve de manière à permettre un accès des gaz de combustion depuis chaque cuve dans le carneau de liaison.

18. Four suivant l'une ou l'autre des revendications 16 et 17, dans lequel le dispositif d'injection susdit comprend au moins une canne d'injection (10) droite perforée introduite dans le carneau de liaison (3) et alimentée par ladite source de gaz contenant de l'oxygène complémentaire (19).

19. Four selon la revendication 18, dans lequel le carneau de liaison (3) présente un axe longitudinal (L) et ladite au moins une canne d'injection (10) droite perforée est placée transversalement par rapport à l'axe longitudinal du carneau de liaison.

20. Four selon l'une ou l'autre des revendications 18 et 19, dans lequel ladite canne d'injection (10) comporte un ou plusieurs orifices (11) orientés pour injecter le gaz contenant de l'oxygène complémentaire vers une partie haute du carneau de liaison.

21. Four selon l'une quelconque des revendications 18 à 20 dans lequel ladite canne (10) est introduite dans le carneau de liaison (3) par une ouverture (13) équidistante desdites cuves.

22. Four selon l'une ou l'autre des revendications 16 et 17, dans lequel le carneau de liaison (3) présente un plafond (12) et un axe longitudinal (L) et le dispositif d'injection de gaz contenant de l'oxygène complémentaire (18) comporte une ou plusieurs ouvertures (14) prévues dans ce plafond du carneau de liaison au travers desquelles le gaz contenant de l'oxygène complémentaire peut être alimenté à partir de ladite source (20) d'un tel gaz, lesdites ouvertures étant situées à équidistance des cuves et perpendiculairement à cet axe longitudinal.

23. Four selon l'une quelconque des revendications 19 à 22, dans lequel le dispositif d'alimentation en combustible comprend une ou plusieurs séries d'une ou plusieurs lances mono-jet ou multi-jet agencées de manière à produire des faisceaux de jets de combustible parallèles dans la cuve correspondante, ces faisceaux étant parallèles entre eux, les jets de combustible des différents faisceaux susdits étant situés dans plusieurs plans parallèles à l'axe longitudinal (L) du carneau de liaison.

24. Four selon la revendication 23, dans lequel lesdits orifices de la canne d'injection ou les ouvertures dans le plafond du carneau de liaison pour l'injection du gaz contenant de l'oxygène complémentaire sont prévus dans lesdits plans formés par les faisceaux susdits.

25. Four suivant la revendication 17, **caractérisé en ce que** le dispositif d'injection susdit est agencé pour injecter du gaz contenant de l'air complémentaire dans le carneau de liaison, dans les canaux périphériques ou à la fois dans le carneau de liaison et les canaux périphériques.

26. Four suivant l'une quelconque des revendications 15 à 25, **caractérisé en ce qu'**il comprend trois cuves et trois voies de transfert pour gaz qui interconnectent chacune deux desdites cuves précitées, ainsi qu'un dispositif d'injection pour injecter du gaz contenant de l'oxygène complémentaire dans chacune desdites voies de transfert pour gaz.

## Patentansprüche

1. Verfahren zum Kalzinieren von Mineralgestein in einem regenerativen Parallelstrom-Vertikalschachtofen, in dem mindestens zwei Schächte durch einen Übertragungskanal für Gase miteinander verbunden sind, wobei dieses Verfahren Folgendes umfasst:
- ein Beladen von Mineralgestein oben an den Schächten, und
- ein Entladen von kalziniertem Mineralgestein unten an den Schächten,
- wobei jeder Schacht abwechselnd im Brenn-Modus und im Vorwärm-Modus fungiert, wobei ein Schacht während eines vorbestimmten Zeitraums im Brenn-Modus ist, während ein anderer Schacht im Vorwärm-Modus ist, und umgekehrt,
- wobei der Brenn-Modus, in Anwesenheit des Mineralgesteins, eine Verbrennung von Brennstoff in Anwesenheit von Gas umfasst, welches Sauerstoff enthält, um ein Brennen dieses Gesteins in kalziniertes Gestein zu erhalten, eine Abgabe von Verbrennungsgasen, und eine Bewegung dieser Verbrennungsgase aus dem Schacht im Brenn-Modus in den anderen Schacht im Vorwärm-Modus über den Übertragungskanal für Gase,
- wobei der Vorwärm-Modus einen Wärmeaustausch zwischen dem Mineralgestein und den Verbrennungsgasen umfasst, welche aus dem Übertragungskanal für Gase stammen,
wobei dieses Verfahren **dadurch gekennzeichnet ist, dass** es ferner eine Einspritzung von Gas, welches zusätzlichen Sauerstoff enthält, in den Übertragungskanal für Gase mit Oxidation von unverbrannten Komponenten umfasst, welche in den Verbrennungsgasen enthalten sind, die durch diesen Übertragungskanal für Gase strömen.

2. Verfahren nach Anspruch 1, in dem das Gas, welches Sauerstoff enthält und einem Schacht im Brenn-Modus zugeführt wird, in Form eines Gases vorliegt, das primären Sauerstoff enthält und gleichzeitig dem Brennstoff zugeführt wird, und in Form eines Gases, das sekundären Sauerstoff enthält und oben an diesem Schacht durch das zu brennende Gestein eingebracht wird.

3. Verfahren nach einem der Ansprüche 1 und 2, wobei die Oxidation von unverbrannten Komponenten bei einer Oxidationstemperatur durchgeführt wird, die ausreichend hoch ist, um eine Oxidation von Kohlenstoffmonoxid zu ermöglichen, und ausreichend niedrig, um einen thermischen Abbau von Distickstoffmolekülen in atomaren Stickstoff zu vermeiden.

4. Verfahren nach Anspruch 3, wobei die Oxidationstemperatur zwischen 800 °C und 1.300 °C liegt.

5. Verfahren nach irgendeinem der Ansprüche 1 bis 4, wobei die Menge an zusätzlichem Sauerstoff, die mithilfe des Gases, welches den zusätzlichen Sauerstoff enthält, in den Übertragungskanal für Gase eingespritzt wird, das zwischen 0,1- und 50-Fache der stöchiometrischen Sauerstoffmenge ist, berechnet auf Grundlage der CO-Menge, gemessen am Ausgang des Ofens in Abwesenheit dieses Gases, welches den zusätzlichen Sauerstoff enthält.

6. Verfahren nach irgendeinem der Ansprüche 1 bis 5, wobei das Gas, welches zusätzlichen Sauerstoff enthält, zum Zeitpunkt der Einspritzung eine Temperatur zwischen der Raumtemperatur und 400 °C aufweist.

7. Verfahren nach irgendeinem der Ansprüche 1 bis 6, wobei das Gas, welches zusätzlichen Sauerstoff enthält, Luft, mit Sauerstoff angereicherte Luft oder Sauerstoff ist.

8. Verfahren nach irgendeinem der Ansprüche 1 bis 7, wobei das Gas, welches zusätzlichen Sauerstoff enthält, zumindest einen Verbrennungskatalysator enthält.

9. Verfahren nach irgendeinem der Ansprüche 1 bis 8, wobei der Übertragungskanal für Gase ein Verbindungsrohr ist, das einen Schacht direkt mit dem anderen verbindet.

10. Verfahren nach Anspruch 9, wobei das Gas, welches zusätzlichen Sauerstoff enthält, äquidistant von den Schächten, die das Verbindungsrohr miteinander verbindet, in dieses eingespritzt wird.

11. Verfahren nach einem der Ansprüche 9 und 10, wobei der Brennstoff in den Schacht im Brenn-Modus durch Spritzdüsen eingebracht wird, welche parallele Bündel von Brennstoffstrahlen erzeugen, die verbrannt werden und Ströme von Verbrennungsgasen formen, die durch das Verbindungsrohr strömen, wobei eine oben erwähnte Einspritzung von Gas, welches zusätzlichen Sauerstoff enthält, auf Höhe jedes dieser Ströme von Verbrennungsgasen durchgeführt wird.

12. Verfahren nach irgendeinem der Ansprüche 1 bis 8, wobei der Übertragungskanal für Gase durch ein Verbindungsrohr gebildet ist, welches umgebende Leitungen verbindet, die derart rund um jeden Schacht angeordnet sind, dass ein Zugang der Verbrennungsgase aus jedem Schacht in das Verbindungsrohr möglich ist.

13. Verfahren nach Anspruch 12, wobei die Einspritzung von Gas, welches zusätzlichen Sauerstoff enthält, im Verbindungsrohr, in den umgebenden Leitungen oder zugleich im Verbindungsrohr und den umgebenden Leitungen stattfindet.

14. Verfahren nach einem der Ansprüche 1 bis 13, wobei der Ofen drei Schächte und drei Übertragungskanäle für Gase umfasst, die jeweils zwei der oben genannten Schächte miteinander verbinden, und wobei ein Schacht während eines vorbestimmten Zeitraums im Brenn-Modus ist, während die zwei anderen Schächte im Vorwärm-Modus sind.

15. Regenerativer Parallelstrom-Vertikalschachtofen zur Herstellung von kalziniertem Mineralgestein, umfassend:
- mindestens zwei Schächte (1, 2), die miteinander durch einen Übertragungskanal für Gase (3) verbunden sind,
wobei jeder der Schächte Folgendes umfasst:
- mindestens eine Vorrichtung zur Zuführung von Brennstoff (4),
- mindestens eine Zufuhr von Gas, welches Sauerstoff enthält, für die Verbrennung des Brennstoffs (5(a), 5(b)),
- einen Eingang zum Beladen des Mineralgesteins (6), und
- einen Ausgang zum Entladen des hergestellten kalzinierten Mineralgesteins (7), und
- eine Ableitung von Verbrennungsgasen (8),
wobei der erwähnte Ofen **dadurch gekennzeichnet ist, dass** er ferner eine Quelle von Gas, welches zusätzlichen Sauerstoff enthält, und eine Einspritzvorrichtung umfasst, die an diese Quelle von Gas (18), welches zusätzlichen Sauerstoff enthält, angeschlossen ist und angeordnet ist, um dieses Gas, welches zusätzlichen Sauerstoff enthält, in den Übertragungskanal für Gase (3) einzuspritzen.

16. Ofen nach Anspruch 15, wobei der Übertragungskanal für Gase ein Verbindungsrohr ist, das einen Schacht direkt mit dem anderen verbindet.

17. Ofen nach Anspruch 15, wobei der Übertragungskanal für Gase durch ein Verbindungsrohr gebildet ist, welches umgebende Leitungen verbindet, die derart rund um jeden Schacht angeordnet sind, dass ein Zugang der Verbrennungsgase aus jedem Schacht in das Verbindungsrohr möglich ist.

18. Ofen nach dem einen oder anderen der Ansprüche 16 und 17, wobei die oben genannte Einspritzvorrichtung zumindest eine perforierte, gerade Ladelanze (10) umfasst, welche in das Verbindungsrohr (3) eingeführt ist und durch die Quelle von Gas (19), welches zusätzlichen Sauerstoff enthält, zugeführt wird.

19. Ofen nach Anspruch 18, wobei das Verbindungsrohr (3) eine Längsachse (L) aufweist und die zumindest eine perforierte, gerade Ladelanze (10) quer in Bezug zur Längsachse des Verbindungsrohres angebracht ist.

20. Ofen nach dem einen oder anderen der Ansprüche 18 und 19, wobei die Ladelanze (10) eine oder mehrere Öffnungen (11) hat, die ausgerichtet sind, um das Gas, welches zusätzlichen Sauerstoff enthält, in einen höheren Teil des Verbindungsrohres einzuspritzen.

21. Ofen nach irgendeinem der Ansprüche 18 bis 20, wobei die Lanze (10) in das Verbindungsrohr (3) über eine Öffnung (13) eingeführt wird, welche äquidistant von den Schächten ist.

22. Ofen nach dem einen oder anderen der Ansprüche 16 und 17, wobei das Verbindungsrohr (3) einen Oberboden (12) und eine Längsachse (L) aufweist und wobei die Vorrichtung zur Einspritzung des Gases, welches zusätzlichen Sauerstoff enthält, (18) eine oder mehrere Öffnungen (14) hat, die in diesem Oberboden des Verbindungsrohres vorgesehen sind, über die das Gas, welches zusätzlichen Sauerstoff enthält, aus der Quelle (20) eines solchen Gases zugeführt werden kann, wobei die Öffnungen äquidistant von den Schächten und lotrecht zu dieser Längsachse gelegen sind.

23. Ofen nach irgendeinem der Ansprüche 19 bis 22, wobei die Vorrichtung zur Zuführung von Brennstoff eine oder mehrere Reihen von einer oder mehreren ein- oder mehrstrahligen Spritzdüsen umfasst, die derart angeordnet sind, um parallele Bündel von Brennstoffstrahlen im entsprechenden Schacht zu erzeugen, wobei diese Bündel untereinander parallel sind und die Brennstoffstrahlen der verschiedenen oben genannten Bündel in mehreren Ebenen parallel zur Längsachse (L) des Verbindungsrohres gelegen sind.

24. Ofen nach Anspruch 23, wobei die Öffnungen der Ladelanze oder die Öffnungen im Oberboden des Verbindungsrohres für die Einspritzung des Gases, welches zusätzlichen Sauerstoff enthält, in den Ebenen vorgesehen sind, welche durch die oben genannten Bündel gebildet werden.

25. Ofen nach Anspruch 17, **dadurch gekennzeichnet, dass** die oben genannte Einspritzvorrichtung angeordnet ist, um Gas, welches zusätzliche Luft enthält, in das Verbindungsrohr, in die umgebenden Leitungen oder zugleich in das Verbindungsrohr und die umgebenden Leitungen einzuspritzen.

26. Ofen nach irgendeinem der Ansprüche 15 bis 25, **dadurch gekennzeichnet, dass** er drei Schächte und drei Übertragungskanäle für Gase umfasst, die jeweils zwei der oben genannten Schächte miteinander verbinden, sowie eine Einspritzvorrichtung, um Gas, welches zusätzlichen Sauerstoff enthält, in jeden der Übertragungskanäle für Gase einzuspritzen.

## Claims

1. A process for calcining mineral rock in a regenerative parallel-flow vertical furnace, wherein at least two shafts are interconnected by a gas transfer channel, said process comprising:
- loading mineral rock at the top of the shafts, and
- unloading calcined mineral rock at the bottom of the shafts,
- each shaft operating alternately in firing and in preheating mode, one shaft being in firing mode for a predetermined period of time while another shaft is in preheating mode, and conversely,
- the firing mode comprising, in the presence of said mineral rock, a combustion of fuel in the presence of gas containing oxygen so as to obtain a firing of the rock into calcined rock, a release of combustion gases, and a passage of these combustion gases from the shaft in firing mode to the other shaft in preheating mode through said gas transfer channel,
- the preheating mode comprising a heat exchange between said mineral rock and said combustion gases from said gas transfer channel,
said process being **characterized in that** it further comprises an injection of gases containing complementary oxygen into said gas transfer channel with oxidation of unburnt products contained in the combustion gases passing through said gas transfer channel.

2. The process according to claim 1, wherein the oxygen-containing gas supplied to a shaft in firing mode is in the form of a gas containing primary oxygen, supplied simultaneously to the fuel, and a gas containing secondary oxygen introduced at the top of this shaft through the rock to be fired.

3. The process according to one of claims 1 and 2, wherein said oxidation of unburnt products is carried out at an oxidation temperature high enough to allow oxidation of carbon monoxide and low enough to avoid thermal degradation of dinitrogen molecules to atomic nitrogen.

4. The process according to claim 3, wherein said oxidation temperature is between 800 °C and 1300 °C.

5. The process according to any of claims 1 to 4, wherein the amount of complementary oxygen injected into said gas transfer channel using the gas containing complementary oxygen is between 0.1 and 50 times the stoichiometric amount of oxygen calculated on the basis of the amount of CO measured at the furnace outlet in the absence of said gas containing complementary oxygen.

6. The process according to any of claims 1 to 5, wherein the gas containing complementary oxygen has at the time of injection a temperature between room temperature and 400 °C.

7. The process according to any of claims 1 to 6, wherein the gas containing complementary oxygen is air, oxygen-enriched air or oxygen.

8. The process according to any of claims 1 to 7, wherein the gas containing complementary oxygen contains at least one combustion catalyst.

9. The process according to any of claims 1 to 8, wherein said gas transfer channel is a connecting flue that directly connects one shaft to the other.

10. The process according to claim 9, wherein the gas containing complementary oxygen is injected into the connecting flue equidistant from the shafts that it interconnects.

11. The process according to one of claims 9 and 10 wherein the fuel is supplied into the shaft in firing mode by nozzles producing parallel bundles of fuel jets which undergo combustion and form combustion gases lines which pass through the connecting flue, one said injection of gas containing complementary oxygen being carried out at each of these combustion gases lines.

12. The process according to any of claims 1 to 8 wherein said gas transfer channel is formed from a connecting flue that connects peripheral channels arranged around each shaft so as to allow access of combustion gases from each shaft into the connecting flue.

13. The process according to claim 12, wherein said injection of gas containing complementary oxygen takes place in the connecting flue, in the peripheral channels or in both the connecting flue and the peripheral flues.

14. The process according to one of claims 1 to 13, wherein the furnace comprises three shafts and three gas transfer channels which each interconnect two of said shafts, and wherein one shaft is in firing mode for a predetermined period of time while the other two shafts are in preheating mode.

15. A regenerative parallel-flow vertical furnace for the production of calcined mineral rock comprising
- at least two shafts (1, 2) interconnected by a gas transfer channel (3),
each of said shafts comprising
- at least one fuel supply device (4),
- at least one oxygen-containing gas supply for the fuel combustion (5(a), 5(b)),
- an inlet for loading mineral rock (6), and
- an outlet for discharging said produced calcined mineral rock (7), and
- a combustion gases exhaust (8),
said furnace being **characterized in that** it further comprises a gas containing complementary oxygen source and an injection device connected to said source of gas containing complementary oxygen (18) and arranged to inject said gas containing complementary oxygen into said gas transfer channel (3).

16. The furnace according to claim 15, wherein the gas transfer channel is a connecting flue that directly connects one shaft to the other.

17. The furnace according to claim 15, wherein said gas transfer channel is formed of a connecting flue that connects peripheral channels arranged around each shaft so as to allow access of combustion gases from each shaft into the connecting flue.

18. The furnace according to any of claims 16 and 17, wherein the above-mentioned injection device comprises at least one perforated straight injection rod (10) introduced into the connecting flue (3) and supplied by said source of gas containing complementary oxygen (19).

19. The furnace according to claim 18, wherein the connecting flue (3) has a longitudinal axis (L) and the at least one perforated straight injection rod (10) is placed transversely to the longitudinal axis of the connecting flue.

20. The furnace according to claims 18 and 19, wherein said injection rod (10) has one or more orifices (11) oriented to inject the gas containing complementary oxygen to an upper part of the connecting flue.

21. The furnace according to any of claims 18 to 20 in which said rod (10) is introduced into the connecting flue (3) through an opening (13) equidistant from said shafts.

22. The furnace according to either of claims 16 and 17, wherein the connecting flue (3) has a ceiling (12) and a longitudinal axis (L) and the injection device of gas containing complementary oxygen (18) has one or more openings (14) provided in this ceiling of the connecting flue through which the gas containing complementary oxygen can be supplied from said source (20) of such gas, said openings being located equidistant from the shafts and perpendicular to this longitudinal axis.

23. The furnace according to any of claims 19 to 22, wherein the fuel supply device comprises one or more series of one or more single-jet or multi-jet nozzles arranged in such a way as to produce parallel fuel jet bundles in the corresponding shaft, these bundles being parallel to each other, the fuel jets of the different said bundles being located in several planes parallel to the longitudinal axis (L) of the connecting flue.

24. The furnace according to claim 23, wherein said orifices of the injection rod or openings in the ceiling of the connecting flue for injecting gas containing complementary oxygen are provided in said planes formed by said bundles.

25. The furnace according to claim 17, **characterized in that** the above-mentioned injection device is arranged to inject complementary air-containing gas into the connecting flue, into the peripheral channels or both into the connecting flue and the peripheral channels.

26. A furnace according to any one of claims 15 to 25, **characterized in that** it comprises three shafts and three gas transfer channels each interconnecting two of said shafts, as well as an injection device for injecting gas containing complementary oxygen into each of said gas transfer channels.
